# EUROPÄISCHE PATENTANMELDUNG

(11) **EP 4 495 346 A1**
(43) Veröffentlichungstag der Anmeldung: **22.01.2025**
(21) Anmeldenummer: 23186006.5
(22) Anmeldetag: 18.07.2023
(51) Int. Cl.: E04B 1/35, A01G 9/02, B33Y 70/10, E01F 8/02, E04G 21/04

(54) **VERFAHREN ZUR ERRICHTUNG EINES BAUWERKS UND BAUWERK**

(71) Anmelder: Strohecker, Guido Romanus, 8042 Graz (AT); Baumit Beteiligungen GmbH, 2754 Waldegg (AT)
(72) Erfinder: Strohecker, Guido Romanus, 8042 Graz (AT)
(74) Vertreter: Schwarz & Partner Patentanwälte GmbH

(57) **Zusammenfassung**

Verfahren zur Errichtung eines Bauwerks umfassend die Schritte Ausheben einer Baugrube (1) und Errichten eines Kellergeschoßes (2) und/oder Vorbereiten einer Gründungsebene und Errichten einer Grundplatte des Bauwerks; Errichten einer Tragestruktur (3) des Bauwerks in Skelettbauweise; Fertigen zumindest eines Bauelements (4) des Bauwerks im Bereich der Baustelle des Bauwerks mittels einer additiven Fertigungsvorrichtung (5), wobei das Bauelement (4) zumindest einen Hohlraum (6) aufweist; Verfüllen des Hohlraums (6) des Bauelements (4) mit einem Füllmaterial und Befestigen des Bauelements (4) an der Tragestruktur (3).

## Beschreibung

Die Erfindung betrifft ein Verfahren zur Errichtung eines Bauwerks gemäß Anspruch 1 und ein Bauwerk gemäß Anspruch 12.

Die Errichtung von Bauwerken beziehungsweise Gebäuden ist ein Vorgang, welcher herkömmlicherweise mit einem großen Ressourcen- und Personalaufwand verbunden ist. Um diese Aufwände zu reduzieren und somit Kosten und Personalressourcen zu sparen, wurden im Laufe der letzten Jahrzehnte verschiedene Errichtungsverfahren für Bauwerke entwickelt, welche zumindest manche Arbeitsschritte mit Hilfe der Produktion vorgefertigter Bauelemente von der eigentlichen Baustelle auslagern. Derartige Verfahren werden oftmals auch als Fertigteilbauweise oder Modulbauweise bezeichnet. Durch diese Verfahren war es möglich die Errichtungszeit von neuen Gebäuden maßgeblich zu reduzieren, und Kosten zu senken. Ein Nachteil derartiger Verfahren besteht jedoch darin, dass die Verwendung standardisierter Bauteile eine Einschränkung hinsichtlich der architektonischen Gestaltungsfreiheit der derart errichteten Bauwerke bedeutet. Individuelle Gebäudeformen sind somit nur innerhalb des Korsetts der vorgefertigten Bauteilformen möglich.

Ein weiterer Aspekt, welcher in den letzten Jahren im Bausektor zunehmend an Bedeutung gewonnen hat, ist die nachhaltige und ressourcenschonende Errichtung von Bauwerken. Zwar sind am Markt mittlerweile eine Vielzahl unterschiedlicher Baumaterialien, wie beispielsweise Dämmstoffe aus Naturfasern verfügbar, welche günstigere Ökobilanzen aufweisen als traditionelle Materialien, jedoch sind diese in der Regel mit erhöhten Kosten verbunden.

Es ist die Aufgabe der vorliegenden Erfindung ein Verfahren zur Errichtung eines Bauwerks und ein Bauwerk bereitzustellen, welche diese Nachteile des Standes der Technik vermeiden.

Erfindungsgemäß wird die vorliegende Aufgabe durch ein Verfahren zur Errichtung eines Bauwerks mit den Merkmalen von Anspruch 1 und ein Bauwerk mit den Merkmalen von Anspruch 12 gelöst.

Das erfindungsgemäße Verfahren zur Errichtung eines Bauwerks umfasst die Schritte des Aushebens einer Baugrube und des Errichtens eines Kellergeschoßes und/oder Vorbereiten einer Gründungsebene und Errichten einer Grundplatte des Bauwerks. Des Weiteren wird eine Tragestruktur des Bauwerks in Skelettbauweise errichtet. Mittels einer additiven Fertigungsvorrichtung wie zum Beispiel einem 3D-Drucker für Beton, Mörtel, Ton etc. wird zumindest ein Bauelement des Bauwerks im Bereich der Baustelle des Bauwerks vor Ort gefertigt, wobei das Bauelement zumindest einen Hohlraum aufweist. Dieser Hohlraum des Bauelements wird des Weiteren im Bereich der Baustelle des Bauwerks vor Ort mit einem Füllmaterial gefüllt, und das Bauelement wird an der Tragstruktur befestigt.

Durch das erfindungsgemäße Verfahren wird der Vorteil erreicht, dass die Fertigung des beziehungsweise der Bauelemente direkt im Bereich der, oder an der Baustelle erfolgen kann. Hierdurch werden die Transportwege für die Bauelemente drastisch reduziert und auf diese Weise Ressourcen, Energie eingespart und der Ausstoß von Treibhausgas reduziert. Des Weiteren wird durch das erfindungsgemäße Verfahren ermöglicht, maßgeschneiderte Bauelemente für spezifische Bauwerke zu fertigen. Hierdurch erhöht sich der architektonische Gestaltungsspielraum wesentlich im Vergleich zur herkömmlichen Fertigteil- bzw. Modulbauweise, bei einer gleichzeitigen Kostenreduzierung. Zudem können die additiven Fertigungsvorrichtungen im Rahmen der Erfindung eine wesentlich kleinere Größe aufweisen, als dies für die additive Fertigung des gesamten Gebäudes in einem Schritt zum Beispiel durch 3D-Drucker für Beton, Mörtel und/oder Ton mit Düsenführung über Portalkräne notwendig wäre.

Vorzugsweise umfasst das erfindungsgemäße Verfahren den Schritt des Betreibens der additiven Fertigungsvorrichtung zumindest teilweise mit im Bereich der Baustelle installierten Photovoltaikmodulen, wenn dies die Gegebenheiten zulassen. Hierdurch wird der Energiebedarf der additiven Fertigungsvorrichtung, je nach installierter elektrischer Leistung der Photovoltaikmodule, zumindest teilweise direkt an der Baustelle gedeckt. Hierdurch wird es zudem ermöglicht auch unabhängig von einer externen Stromversorgung die additive Fertigungsvorrichtung zu betreiben, und die Bauelemente zu fertigen. Zudem werden hierdurch zusätzliche Treibhausgas-Emissionen bei der Errichtung des Bauwerks reduziert.

Gemäß der bevorzugten Ausführungsform des erfindungsgemäßen Verfahrens wird beim Ausheben der Baugrube angefallenes Aushubmaterial zum Beispiel Lehm, Löß, Schluff, Schotter, Sand, Kies, Bodenaushub etc. als Füllmaterial verwendet. Hierdurch wird der Ressourcenverbrauch des erfindungsgemäßen Verfahrens weiter reduziert. Dieses Aushubmaterial kann zudem vor der Verfüllung des Hohlraums des Bauelements einem Aufbereitungsschritt wie beispielsweise der Zugabe von Leichtzuschlagstoffen und/oder Leichtfüllstoffen unterzogen werden. Hierdurch wird der Wärmedurchgangskoeffizient λ des Füllmaterials, und somit die thermische Dämmwirkung des Bauelements verbessert. Vorzugsweise umfasst das Aushubmaterial Lehm, wobei Lehm vorzugsweise der Hauptbestandteil des Aushubmaterials ist, und die Aufbereitung umfasst je nach Einsatzgebiet und Anforderung die Zugabe von leichten organischen oder anorganisch mineralischen Zuschlagstoffen wie zum Beispiel natürliche organische Stoffe wie Strohhäcksel, Hanffasern, Korkgranulat etc. Hierdurch werden besonders umweltverträgliche Materialien als Füllmaterial verwendet. Des Weiteren können synthetische organische Stoffe wie EPS, XPS, PUR, PIR, etc., oder natürliche anorganisch mineralische Stoffe wie Perlit, Blähtone, Blähschiefer, Bims, Blähglas, bzw. anorganisch mineralisch synthetische Stoffe wie mineralische Glas- bzw. Mineralfasern, mineralische Schäume, Zementschaum, Schaumbeton, Aerogel etc. zu dem Aushubmaterial zugegeben oder an deren Stelle zugegeben werden.

Gemäß einer alternativen Ausführungsvariante des erfindungsgemäßen Verfahrens ist das Füllmaterial ein Leichtlehm-Perlit Gemisch. Dieses ist ebenfalls, auch bei einer Anlieferung an die Baustelle, insbesondere hinsichtlich einer zukünftigen Entsorgung am Ende der Lebensdauer des Bauwerks besonders umweltverträglich.

Durch den Einsatz von Lehm, oder anderen geeigneten und auch oben erwähnten Aushubmaterialien als Füllstoff erhöht sich die Speichermasse des Bauteils und weiters des gesamten Gebäudes. Es ergibt sich daraus ein sehr großes Potenzial hinsichtlich der effizienten Temperierung von Gebäuden. Entscheidend ist dabei ein hoher Anteil an Speichermasse im Gebäude, da durch die Energiespeicherfähigkeit durch den Massiv-Bauteil nicht ständig aktiv geheizt oder gekühlt werden muss und Temperaturspitzen vermieden werden können. Die Speichermasse wird somit zu einer Art integriertem Energiespeicher für Heizperioden und Kältespeicher für Kühlperioden. Durch eine leichte Temperaturüberhöhung lassen sich dabei auch längere Phasen, wie zum Beispiel ganze Nächte, ohne aktiven Heizungseinsatz überbrücken.

Gemäß der bevorzugten Ausführungsform des erfindungsgemäßen Verfahrens soll das Verfahren die Errichtung einer Überdachung für die additive Fertigungsvorrichtung und die Anbringung der Photovoltaikmodule an der Überdachung umfassen. Hierdurch wird der Vorteil erreicht, dass die additive Fertigungsvorrichtung vor direkter Witterung geschützt wird und gleichzeitig eine Fläche für die Photovoltaikmodule bereitgestellt wird.

Das Verfahren umfasst zudem vorzugsweise das Fertigen zumindest eines Fassadenelements des Bauwerks im Bereich der Baustelle mittels der additiven Fertigungsvorrichtung und das Anbringen des Fassadenelements an einer Außenwandseite des Bauelements. Hierdurch kann mit dem erfindungsgemäßen Verfahren auch die Fassade des Bauwerks individuell gestaltet werden.

Vorzugsweise umfasst das Fassadenelement einen Aufnahmeraum an einer Außenseite des Fassadenelements, welcher zur Aufnahme von Erdmaterial und Pflanzen, beziehungsweise Substrat ausgebildet ist. Hierdurch kann die Fassade begrünt werden, wodurch zusätzlich ein angenehmes Wohnklima und ein natürlicher Kühleffekt erreicht wird.

Das Fertigen des zumindest einen Bauelements mit der additiven Fertigungsvorrichtung umfasst des Weiteren das Verarbeiten von mineralischem 3D-Druckmaterial mit der additiven Fertigungsvorrichtung. Dies ermöglicht eine rasche Fertigung von stabilen und belastbaren Bauelementen. Das mineralische 3D-Druckmaterial umfasst vorzugsweise geeignete Betone, Mörtel und/oder Tone. Das Fertigen des zumindest einen Fassadenelements mit der additiven Fertigungsvorrichtung kann ebenfalls das Verarbeiten von dem mineralischen 3D Druckmaterial mit der additiven Fertigungsvorrichtung umfassen.

Das erfindungsgemäße Bauwerk wird nach dem erfindungsgemäßen Verfahren errichtet. Vorzugsweise umfasst das Bauelement des erfindungsgemäßen Bauwerks zumindest zwei Hohlräume, welche in einer Einbaulage des Bauelements in zwei Ebenen zueinander, verschoben angeordnet sind. Hierdurch wird eine Überlappung der Bauelemente in der Einbaulage erreicht, wodurch Kältebrücken vermieden werden.

Zwischen dem Fassadenelement und dem Bauelement ist zudem vorzugsweise eine Hinterlüftung vorgesehen. Durch die Hinterlüftung werden Schäden durch Feuchtigkeit und Bewitterung am Bauwerk langfristig vermieden.

Bei Betrachtung der Rückbaufähigkeit des Gebäudes besteht bei der erfindungsgemäßen Bauweise der Vorteil des sortenreinen Trennens von Materialien. Für die Fügung der Bauteile können thermisch getrennte Schraubverbindungen sowie Quetsch- oder Quelldichtbänder aus vorrangig natürlichen Materialien zum Einsatz kommen. Somit kann die Bauweise so gewählt werden, dass nahezu keine Klebeverbindungen eingesetzt werden. Das sortenreine Trennen ermöglicht es, Materialien besser zu recyceln bzw. später in einen Wiederverwertungs-Kreislauf zu bringen.

Gemäß der bevorzugten Ausführungsform des erfindungsgemäßen Bauwerks erfolgt die Ausführung der Tragestruktur in Skelettbauweise.

Vorteilhafte Ausgestaltungen des erfindungsgemäßen Verfahrens und des erfindungsgemäßen Bauwerks sowie alternative Ausführungsvarianten werden in weiterer Folge mit Bezug auf die Figuren näher erläutert.
Figuren 1a bis 1f zeigen schematisch den Ablauf eines erfindungsgemäßen Verfahrens.
Figur 2a zeigt einen Wandaufbau gemäß dem Stand der Technik.
Figuren 2b bis 2d zeigen einen Wandaufbau einer Außenwand eines erfindungsgemäßen Gebäudes.
Figur 3 zeigt einen Querschnitt durch den Wandaufbau der Außenwand gemäß Figur 2d.
Figur 4 zeigt verschiedene Ausgestaltungen von Fassadenelementen des erfindungsgemäßen Bauwerks.

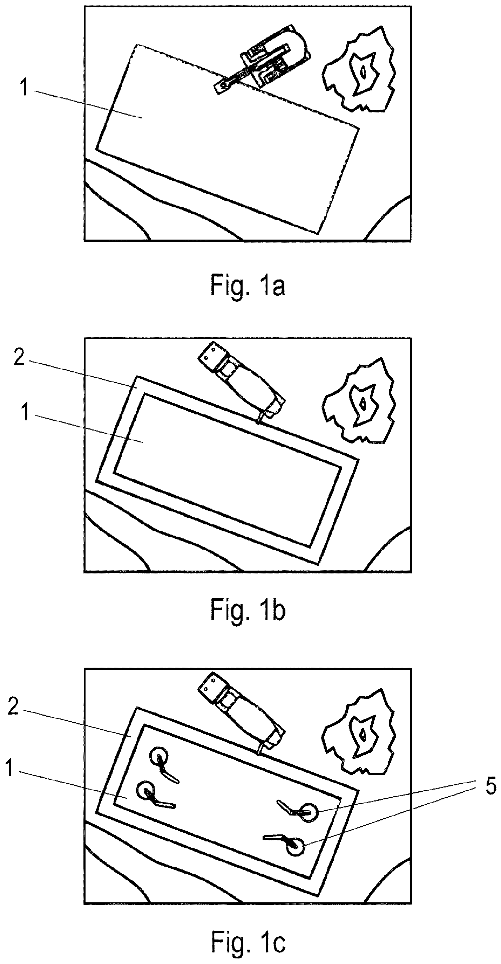

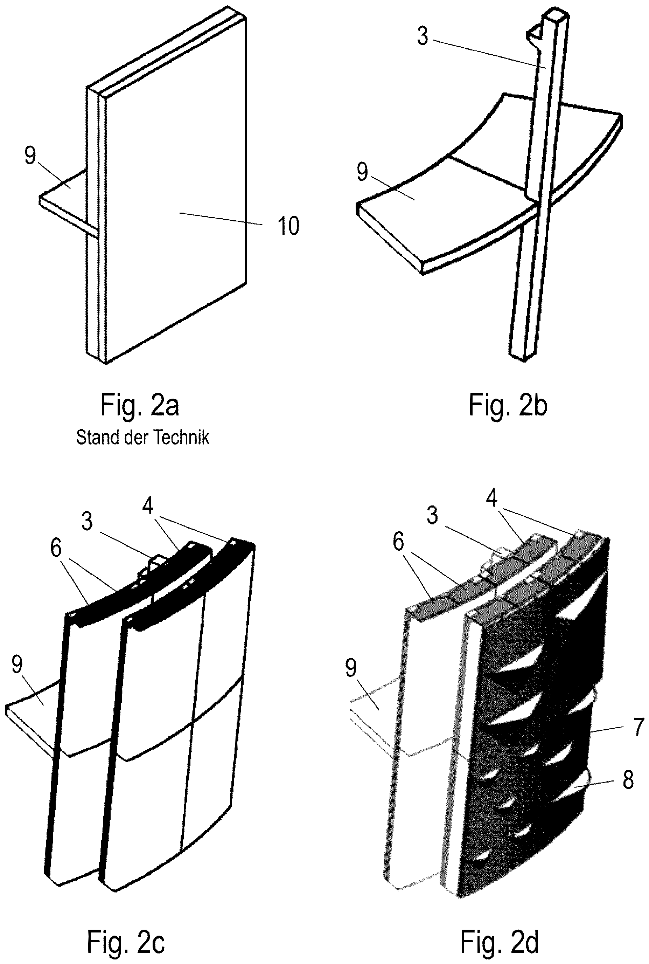

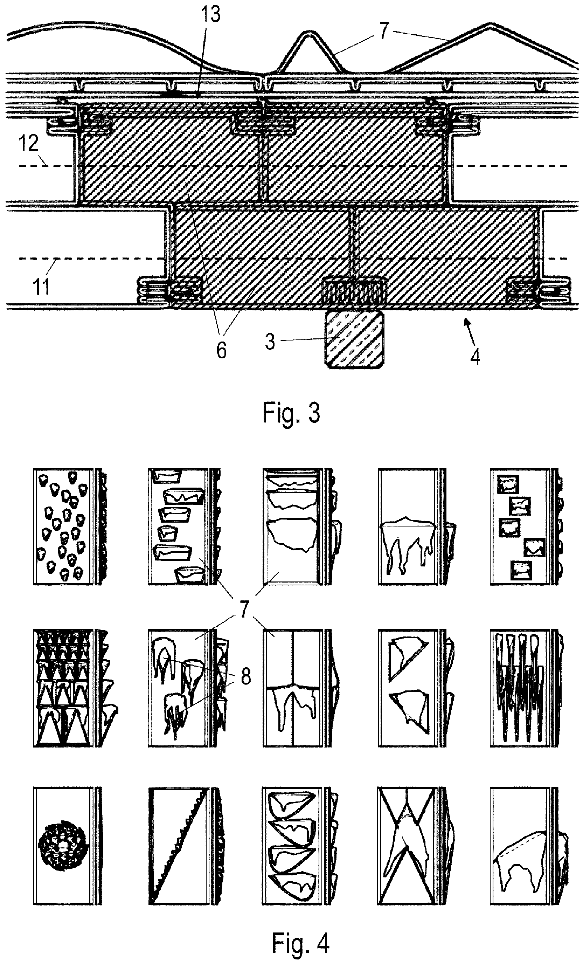

Die Figuren 1a bis 1f zeigen den Ablauf eines erfindungsgemäßen Verfahrens zur Errichtung eines Bauwerks in schematischen Darstellungen einer Baustelle des Bauwerks aus der Vogelperspektive. Wie in Figur 1a dargestellt umfasst das erfindungsgemäße Verfahren das Ausheben einer Baugrube 1 und/oder das Vorbereiten einer Gründungsebene. Dies erfolgt beispielsweise mittels Baumaschinen wie Baggerfahrzeugen, Planiermaschinen und ähnlichen Mitteln. Sobald die Baugrube 1 ausgehoben, beziehungsweise die Gründungsebene vorbereitet wurde, wird ein Kellergeschoß 2 und/oder eine Grundplatte des Bauwerks errichtet. Das Kellergeschoß 2 wird herkömmlicherweise in Stahlbetonbauweise errichtet, kann jedoch beispielsweise nach der Herstellung der Grundplatte auch mittels Betonfertigteilen hergestellt werden. Die Errichtung des Kellergeschoßes 2 ist in Figur 1b schematisch gezeigt, wobei ein Betonlastkraftfahrzeug dargestellt ist, welches Beton in eine Schalung des Kellergeschoßes 2 verfüllt. Als weiterer Schritt im erfindungsgemäßen Verfahren wird eine Tragestruktur 3 des Bauwerks in Skelettbauweise gefertigt. Dies ist in den Figuren 1a bis 1f nicht gesondert gezeigt. Die Tragestruktur 3 in Skelettbauweise ist jedoch ausschnittsweise in Figur 2b und Figur 3 ersichtlich.

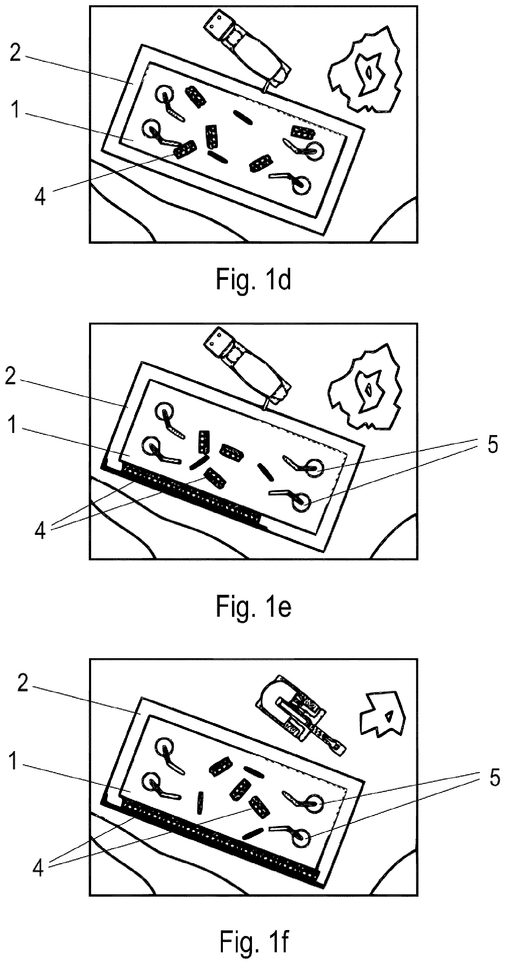

Wie in Figur 1c und in Figur 1d ersichtlich, umfasst das erfindungsgemäße Verfahren zudem das Fertigen zumindest eines Bauelements 4 des Bauwerks im Bereich der Baustelle des Bauwerks mittels zumindest einer additiven Fertigungsvorrichtung 5. Vorzugsweise werden im Rahmen des erfindungsgemäßen Verfahrens, wie in den Figuren 1c bis 1f dargestellt, mehrere additive Fertigungsvorrichtungen 5 eingesetzt, wodurch die Produktionsgeschwindigkeit der Bauelemente 4 erhöht werden kann. Das Fertigen des zumindest einen Bauelements 4 mit der additiven Fertigungsvorrichtung 5 umfasst vorzugsweise das Verarbeiten von mineralischem 3D-Druckmaterial wie beispielsweise 3D-druckfähigen Betonen, Mörteln bzw. Tonen mit der additiven Fertigungsvorrichtung 5. Die additive Fertigungsvorrichtung 5 ist vorzugsweise ein 3D Drucker, welcher mineralische 3D-Druckmaterialien wie 3D-druckfähigen Beton, Mörtel bzw. Ton schichtweise aufträgt, um das Bauelement 4 zu formen. Alternativ kann auch jegliches andere Material verwendet werden, welches sich zur Produktion von Bauelementen 4 für Bauwerke eignet. Das Bauelement 4 weist zudem zumindest einen Hohlraum 6 auf, welcher in Figur 3 ersichtlich ist. Das erfindungsgemäße Verfahren umfasst des Weiteren das Verfüllen des Hohlraums 6 des Bauelements 4 mit einem Füllmaterial und das Befestigen des Bauelements 4 an der Tragestruktur 3. Dies ist in Figur 1e und in Figur 1f, sowie den Figuren 2c und 2d ersichtlich.

Durch das erfindungsgemäße Verfahren wird der Vorteil erreicht, dass eine rasche und individuelle Fertigung der Bauelemente 4 erreicht wird, wodurch einerseits die Errichtungskosten des Bauwerks reduziert, und gleichzeitig die Gestaltungsfreiheit erhöht wird. Beispielsweise ist es mit dem erfindungsgemäßen Verfahren möglich geschwungene, ein- oder mehrfach gekrümmte beziehungsweise organische Bauwerkformen zu erreichen, welche nach dem Stand der Technik nur mit einem hohen Aufwand zum Beispiel durch Sonderschalungsbau und wesentlich erhöhten Kosten realisierbar sind. Das erfindungsgemäße Verfahren ermöglicht somit erstmals derartige, architektonisch hochwertige Bauwerkformen einem breiten Kreis an potenziellen Kunden zu akzeptablen Preisen zugänglich zu machen. Des Weiteren ist eine individuelle Gestaltung des Bauwerks auch während der Bauphase möglich indem die additive Fertigungsvorrichtung 5 mit spezifischen planerischen Daten versorgt wird um spezielle, individuelle Bauelemente 4 anzufertigen.

Gemäß der bevorzugten Ausführungsvariante des erfindungsgemäßen Verfahrens wird die additive Fertigungsvorrichtung 5 zumindest teilweise mit im Bereich der Baustelle installierten, in den Figuren nicht ersichtlichen, Photovoltaikmodulen betrieben. Hierdurch kann der Energieverbrauch des erfindungsgemäßen Verfahrens wesentlich reduziert, und der CO₂-Fußabdruck des so hergestellten Bauwerks zusätzlich verbessert werden. Vorzugsweise umfasst das erfindungsgemäße Verfahren auch die Errichtung einer Überdachung für die additive Fertigungsvorrichtung 5. An diese Überdachung können auch die Photovoltaikmodule angebracht werden. Hierdurch wird gleichzeitig ein Witterungsschutz für die additive Fertigungsvorrichtung 5 hergestellt, und die Energieausbeute der Photovoltaikmodule erhöht.

Idealerweise wird das beim Ausheben der Baugrube 1 angefallene Aushubmaterial zum Beispiel Lehm, Löß, Schluff, Schotter, Sand, Kies, Bodenaushub etc. als Füllmaterial verwendet. Hierdurch wird der Vorteil erreicht, dass keine externe Anlieferung von Füllmaterial notwendig ist und das Aushubmaterial nicht weiter manipuliert bzw. einer späteren Deponierung etc. zugeführt werden muss, wodurch der Ressourcenverbrauch und der ökologische Footprint des erfindungsgemäßen Verfahrens weiter reduziert wird. Das Aushubmaterial wird im Zuge dessen an der Baustelle sinnvollerweise auf seine Eignung als Füllmaterial untersucht. Um die wärmedämmenden Eigenschaften des Aushubmaterials zu verbessern und/oder die Langzeitstabilität des Aushubmaterials zu gewährleisten wird das Aushubmaterial vorzugsweise einem Aufbereitungsschritt unterzogen. Insbesondere Leichtlehm eignet sich zur Verwendung als Füllmaterial. Durch einen Aufbereitungsschritt kann Leichtlehm auf der Baustelle beispielsweise durch die Zugabe von Perlit zu dem lehmigen Aushubmaterial hergestellt werden. Dies verbessert die wärmedämmenden Eigenschaften des Aushubmaterials signifikant.

Gemäß einer Ausführungsvariante des erfindungsgemäßen Verfahrens ist das Füllmaterial ein Leichtlehm-Perlit Gemisch. Dieses Füllmaterial wird hierbei vorzugsweise wie zuvor erwähnt aus dem Aushubmaterial mit dem Aufbereitungsschritt im Bereich der Baustelle hergestellt oder an die Baustelle angeliefert. Diese Ausführungsvariante des erfindungsgemäßen Verfahrens unter Anlieferung des Leichtlehm-Perlit Gemischs wird insbesondere bei Baustellen angewandt, bei welchen sich das Aushubmaterial aufgrund seiner Eigenschaften und Zusammensetzung nicht als Füllmaterial eignet, oder bei welchen beispielsweise kein Kellergeschoß errichtet, sondern lediglich die Gründungsebene vorbereitet und eine Grundplatte auf dieser errichtet wird, und somit kein oder nur zu wenig Aushubmaterial zur Verfügung steht.

Anstatt Perlit können auch andere Stoffe als Zuschlagstoffe zu dem Leichtlehm vorgesehen werden. Diese umfassen beispielsweise Leichtzuschlagstoffe wie Blähton, Blähschiefer, Blähglas, Stroh, Sägemehl, Holzspäne, Hobelspäne, und/oder Korkgranulat. Der Leichtlehmanteil beträgt vorzugsweise zumindest 30%. Diese Leichtzuschlagstoffe erhöhen die Dämmfähigkeit des Füllmaterials.

Gemäß einer weiteren alternativen Ausführungsvariante des erfindungsgemäßen Verfahrens können auch synthetische, organische oder anorganische Dämm-Materialien, Nanogel, Aerogel, Blähglas, EPS-Perlen, Glaswolle, Holzfasern, Perlite, Steinwolle, Stroh und/oder Zellulose als Füllmaterial und/oder als Zuschlagstoffe in Kombination mit einem Grundmaterial als Füllmaterial verwendet werden. Hierdurch kann das erfindungsgemäße Verfahren und das damit errichtete Bauwerk an verschiedene technische Anforderungen und Umwelt- und klimatische Bedingungen angepasst werden.

Mit dem erfindungsgemäßen Verfahren kann zudem auch die Fassadengestaltung des errichteten Bauwerks ausgeführt werden. Hierzu umfasst das Verfahren vorzugsweise die Fertigung zumindest eines Fassadenelements 7 des Bauwerks im Bereich der Baustelle mittels der additiven Fertigungsvorrichtung 5 und das Anbringen des Fassadenelements 7 an einer Außenwandseite des Bauelements. Das Fassadenelement 7 ist beispielsweise in Figur 2d und Figur 3 ersichtlich. Hierdurch wird der Vorteil erreicht, dass auch die Gestaltung der Fassade individuell und kostengünstig erfolgen kann. Durch die Fertigung der Fassadenelemente 7 mit der additiven Fertigungsvorrichtung 5 können eine Vielzahl individuell unterschiedlicher Fassadenelemente 7 realisiert werden. Insbesondere wird hierdurch eine begrünte Fassade ermöglicht, indem das Fassadenelement 7 einen offenen Aufnahmeraum 8 an einer Außenseite des Fassadenelements 7 umfasst, welcher zur Aufnahme von Substrat, Erdmaterial und/oder Pflanzen ausgebildet ist. Figur 4 zeigt als mögliche Beispiele eine Reihe an verschiedenen Ausgestaltungsmöglichkeiten für das Fassadenelement 7 im Rahmen des erfindungsgemäßen Verfahrens, wobei in den Aufnahmeräumen 8 jeweils Pflanzen integriert sind. Die Begrünung der Fassade verbessert das Wohnklima und trägt zur Kühlung und Befeuchtung der Luft im Umfeld der Fassade bei und verbessert so das umgebende Mikroklima. Hierdurch wird insbesondere in den Sommermonaten der Energieverbrauch für eine aktive Bauwerkkühlung reduziert. Das Fertigen des zumindest einen Fassadenelements 7 mit der additiven Fertigungsvorrichtung 5 umfasst das Verarbeiten von mineralischem 3D-Druckmörtel, wie geeigneten 3D-druckfähigen Betonen, Mörteln bzw. Tonen mit der additiven Fertigungsvorrichtung 5. Hierdurch wird ein besonders stabiles, widerstandsfähiges und dauerhaftes Fassadenelement 7 erzeugt. Alternativ kann das Fassadenelement 7 auch aus jeglichem anderen geeigneten Material, wie beispielsweise Kunststoff bzw. Polymeren mit der additiven Fertigungsvorrichtung 5 hergestellt werden.

Ein Ausschnitt einer Außenwand des erfindungsgemäßen Bauwerks, welches mit dem erfindungsgemäßen Verfahren erzeugt wird, ist in den Figuren 2b bis 2d ausschnittsweise dargestellt. Figur 2a zeigt einen Ausschnitt eines Bauwerks gemäß dem Stand der Technik mit einer herkömmlichen Außenwand und einer Geschoßdecke 9. Die Außenwand umfasst hierbei beispielsweise Betonfertigteile, oder ist aus Ziegeln aufgemauert. Auf diese wird an der Außenseite eine Wärmedämmung 10 aufgebracht, welche in Figur 2a ebenfalls ersichtlich ist. Im Unterschied hierzu wird beim erfindungsgemäßen Verfahren die Tragestruktur 3 hergestellt, wie in Figur 2b ersichtlich. Diese kann beispielsweise ein Stahlbetonskelett sein. Hierdurch werden die statischen Anforderungen des Bauwerks erfüllt, und diese dient der Aufnahme der Bauelemente 4. Die Bauelemente 4 werden an der Tragestruktur 3 befestigt, wodurch ein Wandaufbau entsteht, welcher in Figur 2c ersichtlich ist. An einer Außenwandseite der Bauelemente 4 werden, wie bereits erläutert, im Anschluss die Fassadenelemente 7 angebracht. Dies ist in Figur 2d ersichtlich. Hierdurch wird ein statisch stabiles Bauwerk hergestellt, welches eine gute Wärmedämmwirkung und ein architektonisch wertvolles Erscheinungsbild und im Falle des Einsatzes von lokalen Ressourcen aus dem Bodenaushub einen vergleichsweise geringen ökologischen Fußabdruck aufweist.

In Figur 3 ist der Wandaufbau des erfindungsgemäßen Bauwerks in einer Schnittdarstellung im Detail gezeigt. Die schraffierte Fläche in Figur 3 dient zur Kennzeichnung eines der Bauelemente 4 des erfindungsgemäßen Bauwerks in dem Wandaufbau, in der bevorzugten Ausführungsvariante, welches mit der additiven Fertigungsvorrichtung 5 hergestellt wurde. Dieses umfasst zumindest zwei Hohlräume 6, welche in einer Einbaulage des Bauelements 4, welche in Figur 2c, 2d und 3 ersichtlich ist, in zwei Ebenen zueinander, verschoben bzw. versetzt angeordnet sind. Vorzugsweise umfasst das Bauelement 4, wie in Figur 3 dargestellt vier Hohlräume 6, wobei jeweils zwei der Hohlräume 6 nebeneinander in einer ersten Ebene 11 angeordnet sind, und zwei weitere Hohlräume 6 in einer weiteren, zur ersten Ebene 11 parallelen zweiten Ebene 12 entlang der zweiten Ebene 12 verschoben bzw. versetzt zu den Hohlräumen 6 der ersten Ebene 11 angeordnet sind. Hierdurch wird eine im Querschnitt stufenförmige Ausgestaltung des Bauelements 4 erreicht. Diese ermöglicht eine Überlappung mehrerer Bauelemente 4 in dem Wandaufbau, wodurch Kältebrücken minimiert, und eine verbesserte thermische Wärmedämmwirkung erreicht wird. Wie oben erwähnt sind die Hohlräume 6 zudem mit Füllmaterial befüllt. Vorzugsweise ist zwischen dem Fassadenelement 7 und dem Bauelement eine Hinterlüftung 13 vorgesehen. Diese Hinterlüftung 13 ist ebenfalls in Figur 3 ersichtlich. Durch die Hinterlüftung 13 werden Schäden durch Feuchtigkeit und Bewitterung am Bauwerk langfristig vermieden. Zudem ermöglicht ein Abstand zwischen dem Bauelement 4 und dem Fassadenelement 7, welcher durch die Hinterlüftung 13 erreicht wird, die Führung von Versorgungsleitungen zu den einzelnen Fassadenelementen 7 innerhalb der Hinterlüftung 13. Hierdurch können beispielsweise die in den Fassadenelementen 7 vorgesehene Pflanzen mit Wasser und gegebenenfalls Dünger versorgt werden, und/oder elektrische Leitungen oder andere Versorgungsleitungen für weitere Medien zum Beispiel zur Versorgung einer Fassadenbeleuchtung etc. vorgesehen werden.

## Patentansprüche

1. Verfahren zur Errichtung eines Bauwerks umfassend die Schritte:
- Ausheben einer Baugrube (1) und Errichten eines Kellergeschoßes (2) und/oder Vorbereiten einer Gründungsebene und Errichten einer Grundplatte des Bauwerks;
- Errichten einer Tragestruktur (3) des Bauwerks in Skelettbauweise;
- Fertigen zumindest eines Bauelements (4) des Bauwerks im Bereich der Baustelle des Bauwerks mittels einer additiven Fertigungsvorrichtung (5), wobei das Bauelement (4) zumindest einen Hohlraum (6) aufweist;
- Verfüllen des Hohlraums (6) des Bauelements (4) mit einem Füllmaterial;
- Befestigen des Bauelements (4) an der Tragestruktur (3).

2. Verfahren gemäß Anspruch 1, **gekennzeichnet durch** den Schritt:
- Betreiben der additiven Fertigungsvorrichtung (5) zumindest teilweise mit im Bereich der Baustelle installierten Photovoltaikmodulen.

3. Verfahren gemäß einem der Ansprüche 1 oder 2, **dadurch gekennzeichnet, dass** beim Ausheben der Baugrube (1) angefallenes Aushubmaterial als Füllmaterial verwendet wird.

4. Verfahren gemäß Anspruch 3, **dadurch gekennzeichnet, dass** das Aushubmaterial vor der Verfüllung des Hohlraums (6) des Bauelements (4) einem Aufbereitungsschritt unterzogen wird.

5. Verfahren gemäß Anspruch 4, **dadurch gekennzeichnet, dass** das Aushubmaterial Lehm umfasst und der Aufbereitungsschritt die Zugabe von Perlit zu dem Aushubmaterial umfasst.

6. Verfahren gemäß einem der Ansprüche 1 oder 2, **dadurch gekennzeichnet, dass** das Füllmaterial ein Leichtlehm-Perlit Gemisch ist.

7. Verfahren gemäß einem der Ansprüche 1 bis 6, **dadurch gekennzeichnet, dass** das Verfahren die Errichtung einer Überdachung für die additive Fertigungsvorrichtung (5) umfasst, und die Photovoltaikmodule an der Überdachung angebracht sind.

8. Verfahren gemäß Anspruch 7, **dadurch gekennzeichnet, dass** das Verfahren das Fertigen zumindest eines Fassadenelements (7) des Bauwerks im Bereich der Baustelle mittels der additiven Fertigungsvorrichtung (5) und das Anbringen des Fassadenelements (7) an einer Außenwandseite des Bauelements umfasst.

9. Verfahren gemäß Anspruch 8, **dadurch gekennzeichnet, dass** das Fassadenelement (7) einen Aufnahmeraum (8) an einer Außenseite des Fassadenelements (7) umfasst, welcher zur Aufnahme von Erdmaterial, Substrat und Pflanzen ausgebildet ist.

10. Verfahren gemäß einem der Ansprüche 1 bis 9, **dadurch gekennzeichnet, dass** das Fertigen des zumindest einen Bauelements (4) mit der additiven Fertigungsvorrichtung (5) das Verarbeiten von mineralischem 3D-Druckmaterial mit der additiven Fertigungsvorrichtung (5) umfasst.

11. Verfahren gemäß Anspruch 8, **dadurch gekennzeichnet, dass** das Fertigen des zumindest einen Fassadenelements (7) mit der additiven Fertigungsvorrichtung (5) das Verarbeiten von mineralischem 3D-Druckmaterial mit der additiven Fertigungsvorrichtung (5) umfasst.

12. Bauwerk errichtet mit einem Verfahren nach einem der Ansprüche 1 bis 11.

13. Bauwerk gemäß Anspruch 12, **dadurch gekennzeichnet, dass** das Bauelement (4) zumindest zwei Hohlräume (6) umfasst, welche in einer Einbaulage des Bauelements (4) in zwei Ebenen (11, 12) zueinander, verschoben angeordnet sind.

14. Bauwerk gemäß einem der Ansprüche 12 oder 13, **dadurch gekennzeichnet, dass** zwischen dem Fassadenelement (7) und dem Bauelement (4) eine Hinterlüftung (13) vorgesehen ist.

15. Bauwerk gemäß einem der Ansprüche 12 bis 14, **dadurch gekennzeichnet, dass** die Tragestruktur (3) in Skelettbauweise ausgeführt ist.
